# EUROPÄISCHE PATENTANMELDUNG

(11) **EP 1 464 437 A2**
(43) Veröffentlichungstag der Anmeldung: **06.10.2004**
(21) Anmeldenummer: 04004930.6
(22) Anmeldetag: 03.03.2004
(51) Int. Cl.: B23K 26/42, B23K 26/32

(54) **Spannkopf für eine Laserschweissvorrichtung**

(30) Priorität: 03.04.2003 DE 10315127
(71) Anmelder: ThyssenKrupp Drauz GmbH, 74076 Heilbronn (DE)
(72) Erfinder: Jucht, Horst, 09337 Hohenstein-Ernstthal (DE)
(74) Vertreter: Adams, Steffen

(57) **Zusammenfassung**

Die Erfindung betrifft einen Spannkopf für eine Laserschweißvorrichtung für zwei oder mehrere Bleche, insbesondere Kraftfahrzeugkarosserien aus beschichteten Blechen, zum Entgasen der Schweißnähte.
Es ist Aufgabe der Erfindung, einen Spannkopf zu schaffen, der nur durch die Gestaltung des Spannvorganges die Entgasung der Schweißnaht herbeiführt, wobei außer der Spannmittel keine Baugruppen für das Entgasen der Schweißnaht erforderlich sind.
Erfindungsgemäß wird die Aufgabe durch folgende Merkmale gelöst:
- zwei gegeneinander gerichtete, an der Spannbasis 2 beweglich gelagerte Spannhebel 9;10;
- zwei Antriebsexzenter 6;7, deren Hübe um 180 Grad zueinander versetzt sind und die je einen Spannhebel 9;10 bewegen;
- einen Antriebsmotor 4 mit regelbarer Drehzahl für beide Antriebsexzenter 6;7 und
- einen an der Spannbasis 2 angeordneten Laserschweißkopf 16 einer Laserschweißvorrichtung

## Beschreibung

Die Erfindung betrifft einen Spannkopf für eine Laserschweißvorrichtung für zwei oder mehrere Bleche, insbesondere für Kraftfahrzeugkarosserien aus beschichteten Blechen, zum Entgasen der Schweißnähte.

Aus der DE 42 16 014 A1 ist eine Laserschweißvorrichtung zum Verschweißen zweier Metallbleche bekannt. An einem Roboterarm ist ein Kopf mit einer scherenartigen Werkstück-Greifanordnung befestigt. Die Werkstück-Greifanordnung besteht aus zwei am Kopf schwenkbar gelagerten doppelarmigen Spannhebeln, die an ihren zum Werkstück zeigenden Enden Rollen tragen, die unmittelbar neben dem Schweißstrahl auf die Werkstücke aufliegen. Auf dem zum Werkstück zeigenden Teil des oberen Spannhebels ist der Schweißkopf starr befestigt. An den anderen Enden der doppelarmigen Spannhebel ist einerseits die Kolbenstange und andererseits deren Druckluftzylinder angelenkt. Im geöffneten Zustand wird die Werkstück-Greifanordnung durch den Roboterarm in die Spannposition bewegt. Dort werden durch Beaufschlagung des Druckluftzylinders die doppelarmigen Spannhebel geschwenkt bis die Rollen mit dem vorbestimmten Druck auf die Werkstücke aufliegen. Während der Vorschubbewegung des Roboterarmes wälzen sich die Rollen auf den Werkstücken ab und drücken die Werkstücke aneinander. Dadurch wird ein genauer Fokusabstand zur Werkstückoberfläche eingehalten. Jedoch ist diese Laserschweißvorrichtung nicht für das Verschweißen von beschichteten Werkstücken geeignet, da keine Maßnahmen für das Entgasen der Schweißnaht vorgesehen sind.

Weiterhin ist eine mitlaufende Andrückvorrichtung zum Aufeinanderspannen zweier oder mehrerer Bleche mit flanschähnlichen Querschnitten bekannt. Diese besteht aus einer konisch ausgebildeten Hülse. Diese umschließt die Schweißoptik des Schweißgerätes und ist an der Schweißoptik geneigt zum Schweißstrahl drehbar gelagert. Neben der Austrittsstelle des Schweißstrahles aus der Hülse liegt die Hülse auf den zu verschweißenden Flansch des Werkstückes auf. Dieser Hülse gegenüberliegend ist spiegelbildlich zu ihr eine zweite Hülse angeordnet, zwischen denen eine umlaufende Messerrolle so gelagert ist, dass ihre Schneide zwischen die Enden der Flansche der zu verschweißenden Bleche nahe der Schweißstelle gedrückt werden kann. Durch die Hülsen werden die Flansche der zu verschweißenden Bleche gegeneinander gedrückt. Durch die Schneide der Messerrolle werden die Enden der Flansche an der Schweißstelle keilförmig geöffnet, damit der beim Schweißen gasförmige Beschichtungswerkstoff entweichen kann.
Für das Entgasen der Schweißnaht muss die Messerrolle mit ihrer Schneide in den Spalt zwischen beiden Flanschen gedrückt werden und in dieser Position die Vorschubbewegung des Roboterarmes ausführen. Wegen der Maßabweichungen der Flansche ist sowohl das Einfädeln der Schneide als auch das Erhalten eines ständigen Eingriffes aufwändig.
(DE 101 16 402 A1).

Es ist Aufgabe der Erfindung, einen gattungsgemäßen Spannkopf zu schaffen, der nur durch die Gestaltung des Spannvorganges die Entgasung der Schweißnaht herbeiführt, wobei außer der Spannmittel keine Baugruppen für das Entgasen der Schweißnaht erforderlich sind.

Erfindungsgemäß wird die Aufgabe durch die Merkmale des Patentanspruches 1 gelöst. Patentansprüche 2 und 3 beschreiben zwei bevorzugte Ausführungsvarianten. Patentansprüche 4, 5 und 6 enthalten vorteilhafte Detaillösungen.
Durch die Drehung der Antriebsexzenter werden die Spannhebel zyklisch gegen die zu schweißenden Bleche gepresst. Der Hub der Antriebsexzenter ist entsprechend der Stärke der zu schweißenden Bleche einstellbar. Im Zeitpunkt des Anpressens der Spannhebel befindet sich die Blechoberfläche im Fokuspunkt des Laserschweißkopfes. Während der Rückbewegung der Spannhebel verharren die zu schweißenden Bleche ohne Lageänderung, so dass sich der Fokuspunkt weiterhin auf der Blechoberfläche befindet. Die zu verschweißenden Bleche werden zwischen den zu verschweißenden Blechen offen und ermöglicht den Austritt der beim Schweißen entstehenden Gase des Beschichtungswerkstoffes. Die Hubzahl der Antriebsexzenter ist der Größe des Schweißvorschubes angepasst. Bei großen Schweißvorschüben werden die Antriebsexzenter mit einer großen Hubzahl angetrieben.
Die Schwenklagerung oder Schiebelagerung der Spannhebel wird überwiegend durch die waagerechte oder senkrechte Lage der zu verschweißenden Bleche bestimmt.
Durch die pulsierende Spannung der zu schweißenden Bleche sind zusätzliche Mittel zur Entgasung der Schweißnaht vermieden.

Die Erfindung ist an einem Ausführungsbeispiel erläutert.
In den Zeichnungen zeigen
- Fig. 1: eine perspektivische Ansicht des schematisch dargestellten Spannkopfes,
- Fig.2: den Spannkopf im geschlossenen Zustand und
- Fig.3: den Spannkopf im geöffneten Zustand.

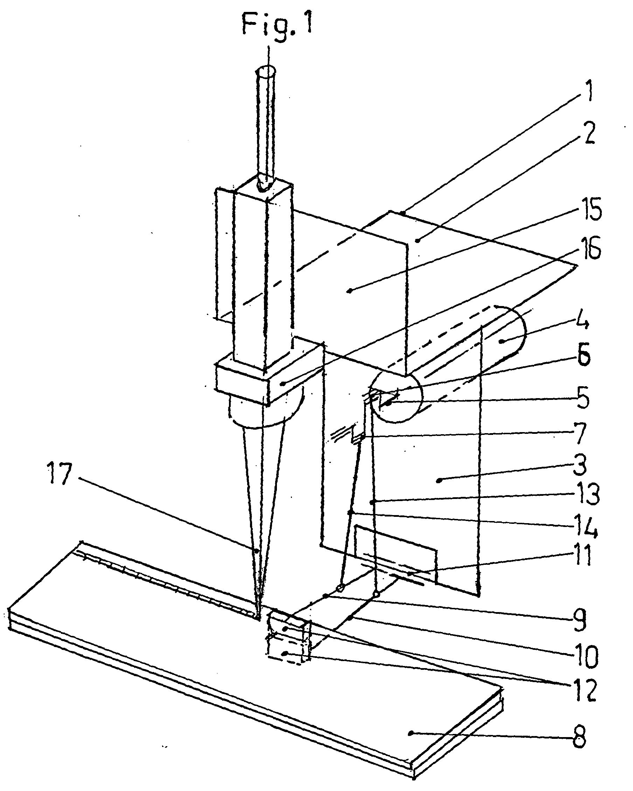

In Fig.1 ist ein Lagerbock 1 dargestellt, der mit seiner nach oben zeigenden Grundfläche 2 am nicht gezeichneten Arm eines Industrieroboters befestigt ist. An einer senkrecht nach unten gerichteten Platte 3 des Lagerbockes 1 ist nahe der Spannbasis 2 ein regelbarer Elektromotor 4 befestigt. Seine Welle 5 ragt durch die Platte 3 des Lagerbockes 1 hindurch und trägt nebeneinander angeordnete Antriebsexzenter 6;7, deren Hubgröße verstellbar ausgeführt ist. Das untere Ende der Platte 3 des Lagerbockes 1 reicht bis zur Ebene, in der die zu schweißenden Bleche 8 fixiert sind. Das erfolgt in der Karosseriefertigung mittels Spanneinrichtungen, die Teil der Fertigungsstraße sind. Am unteren Ende der Platte 3 des Lagerbockes 1 sind nebeneinander zwei Spannhebel 9;10 auf einer Welle 11 schwenkbar gelagert, die parallel zur Oberfläche der zu schweißenden Bleche 8 angeordnet ist. An ihren freien Enden tragen die Spannhebel 9;10 Druckstücke 12, die auf der Ober- und der Unterseite der zu schweißenden Bleche 8 aufliegen. An jeden Spannhebel 9;10 ist etwa mittig eine Schubstange 13;14 angelenkt, deren anderes Ende auf dem jeweiligen Antriebsexzenter 6;7 am regelbaren Elektromotor 4 gelagert ist. An einer senkrechten Platte 15, die seitlich an der Spannbasis 2 des Lagerbockes 1 nach oben gerichtet angeordnet ist, befindet sich ein Schweißkopf 16 einer Laserschweißmaschine. Seine Lage ist so gewählt, dass sein Schweißstrahl 17 auf die Blechoberfläche - in Vorschubrichtung gesehen - unmittelbar nach dem oberen Druckstück 12 fokussiert ist.

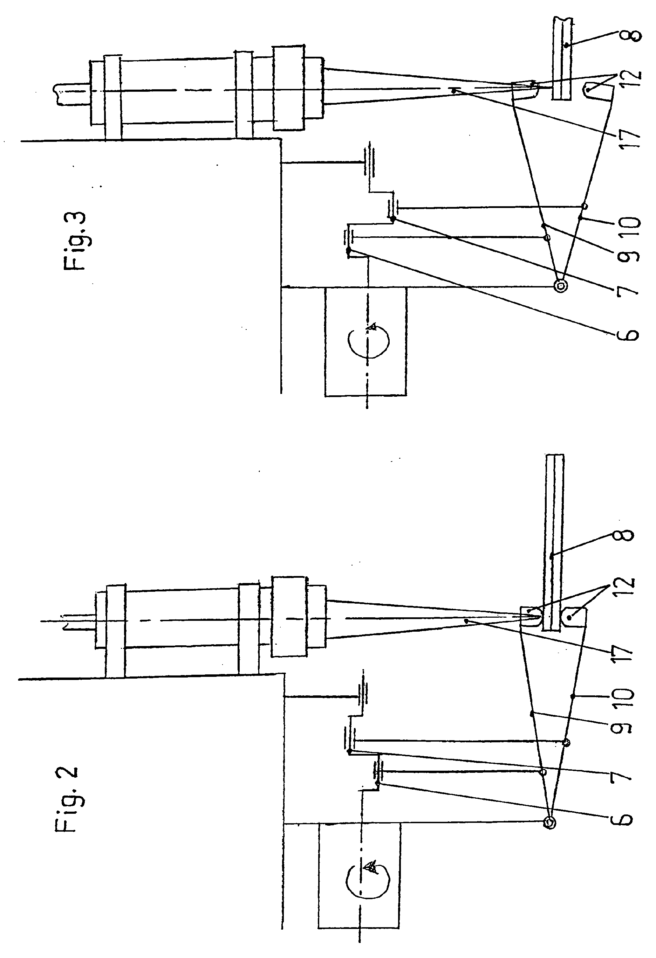

In Fig.2 sind die Spannhebel 9;10 mit ihren Druckstücken 12 durch die um 180 Grad zueinander versetzten Hübe der Antriebsexzenter 6;7 gegen die Ober- und Unterseite der zu schweißenden Bleche 8 gedrückt. Durch die Verstellbarkeit der Antriebsexzenter 6;7 wird deren Hubgröße auf die Blechstärke und den gewünschten Anpressdruck eingestellt. In dieser Drehlage der Antriebsexzenter 6;7 befindet sich die Oberfläche der zu schweißenden Bleche 8 genau im eingestellten Fokuspunkt des Schweißstrahles 12.
Werden die Antriebsexzenter 6;7 um 180 Grad verdreht (Fig.3), so sind die Druckstücke 12 der Spannhebel 9;10 von den Blechen 8 abgehoben. Die zu verschweißenden Bleche 8 werden in dieser Phase nicht gegeneinander gedrückt. Dadurch kann der beim Schweißen vergaste Beschichtungswerkstoff der Bleche 8 unter hohem Druck durch die Fuge zwischen den beiden zu verschweißenden Blechen 8 entweichen. Somit tritt der vergaste Beschichtungswerkstoff nicht durch die flüssige Schweißnaht aus, und es wird eine qualitativ hochwertige Schweißnaht hergestellt.
Da je nach Blechstärke, Material und Form mit unterschiedlichen Vorschüben des Schweißkopfes 16 gearbeitet werden muss, bedarf es auch einer Anpassung der Hubzahl der Antriebsexzenter 6;7 an die Vorschubgeschwindigkeit. Dabei gilt das Prinzip, dass einer hohen Vorschubgeschwindigkeit eine große Hubzahl zugeordnet ist. Die Verstellung der Hubzahl erfolgt durch die Regelung des Elektromotors 4.
An Stelle der Druckstücke 12 an den Enden der Spannhebel 9;10 können dort Rollen gelagert sein, um unerwünschten Verschleiß am Blech 8 zu vermeiden.

### Bezugszeichenliste

- 1: Lagerbock
- 2: Spannbasis
- 3: Platte
- 4: Elektromotor
- 5: Welle
- 6;7: Antriebsexzenter
- 8: Bleche
- 9;10: Spannhebel
- 11: Welle
- 12: Druckstücke
- 13;14: Schubstange
- 15: Platte
- 16: Schweißkopf
- 17: Schweißstrahl

## Patentansprüche

1. Spannkopf für eine Laserschweißvorrichtung für zwei oder mehrere Bleche, insbesondere für Kraftfahrzeugkarosserien aus beschichteten Blechen zum Entgasen der Schweißnähte,
**gekennzeichnet durch**
- zwei gegeneinander gerichtete, an der Spannbasis (2) beweglich gelagerte Spannhebel (9;10);
- zwei Antriebsexzenter (6;7), deren Hübe um 180 Grad zueinander versetzt sind und die je einen der Spannhebel (9;10) bewegen;
- einen Antriebsmotor (4) mit regelbarer Drehzahl für beide Antriebsexzenter (6;7) und
- einem an der Spannbasis (2) angeordneten Laserschweißkopf (16) einer Laserschweißeinrichtung.

2. Spannkopf nach Anspruch 1,
**dadurch gekennzeichnet,**
**dass** die zwei Spannhebel (9;10) nebeneinander am freien Ende eines Lagerbockes (1) schwenkbar gelagert sind, an denen nahe deren freien Enden je eine Schubstange (13;14) angelenkt ist, deren andere Enden auf je einem Antriebsexzenter gelagert sind, die im Lagerbock (1) nahe zur Spannbasis (2) angeordnet und mit einem Motor (4) verbunden sind.

3. Spannkopf nach Anspruch 1,
**dadurch gekennzeichnet,**
**dass** am freien Ende des Lagerbockes (1) zwei Spannhebel (9;10) nebeneinander verschiebbar gelagert sind und durch zwei Antriebsexzenter (6;7) verschoben werden.

4. Spannkopf nach Anspruch 1 bis 3.
**dadurch gekennzeichnet,**
**dass** die Hübe der Antriebsexzenter um 180 Grad zueinander versetzt und die Hubgrößen verstellbar ausgebildet sind.

5. Spannkopf nach Anspruch 1 bis 4,
**dadurch gekennzeichnet,**
**dass** der Laserschweißkopf (16) der Laserschweißeinrichtung so an der Spannbasis (2) angeordnet ist, dass der Laserstrahl (17) in Vorschubrichtung des Laserstrahles (17) nach den Spannhebeln (9;10) auf die zu verschweißenden Bleche (8) fokussierbar ist.

6. Spannkopf nach Anspruch 1 bis 4,
**dadurch gekennzeichnet,**
**dass** die Hubzahl der Antriebsexzenter (6;7) dem Schweißvorschub angepasst ist und zwei bis vierzig Hübe pro Minute beträgt.
